(19) Europäisches Patentamt
European Patent Office
Office européen des brevets

(11) **EP 3 172 512 B1**

(12) **FASCICULE DE BREVET EUROPEEN**

(45) Date de publication et mention de la délivrance du brevet:
**24.03.2021 Bulletin 2021/12**

(21) Numéro de dépôt: **15742379.9**

(22) Date de dépôt: **07.07.2015**

(51) Int Cl.:
*F25D 21/02* (2006.01)  *B64D 15/20* (2006.01)

(86) Numéro de dépôt international:
**PCT/FR2015/051870**

(87) Numéro de publication internationale:
**WO 2016/012685 (28.01.2016 Gazette 2016/04)**

(54) **PROCÉDÉ ET SYSTÈME DE DÉTECTION DE GLACE**

VERFAHREN UND SYSTEM ZUM ERKENNEN VON EIS

METHOD AND SYSTEM FOR DETECTING ICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2014 FR 1457098**

(43) Date de publication de la demande:
**31.05.2017 Bulletin 2017/22**

(73) Titulaire: **Commissariat à l'Énergie Atomique et aux Énergies Alternatives 75015 Paris (FR)**

(72) Inventeur: **MEMPONTEIL, Alain 38600 Fontaine (FR)**

(74) Mandataire: **Cabinet Laurent & Charras Le Contemporain 50 Chemin de la Bruyère 69574 Dardilly Cedex (FR)**

(56) Documents cités:
**EP-A2- 0 083 962      WO-A1-91/04646
WO-A1-2013/068943      US-A- 3 594 775
US-A- 4 980 673      US-A- 4 981 369
US-A- 5 619 144      US-A- 5 790 026
US-A1- 2003 103 547      US-A1- 2014 191 084
US-A1- 2017 019 954      US-B1- 6 328 467**

**Description**

**DOMAINE DE L'INVENTION**

L'invention a trait à la détection d'une couche de glace, notamment de givre, sur une surface, et plus particulièrement la détection de givre par analyse de la réponse thermique d'un système en fonction d'un apport de chaleur.

**ETAT DE LA TECHNIQUE**

Suivant la nature de la surface considérée, les effets d'un dépôt de givre sur celle-ci peuvent aller de la simple dégradation du fonctionnement d'un appareil à la mise en danger de personne. Par exemple, le dépôt de givre sur un évaporateur de pompe à chaleur entraine une surconsommation électrique importante, alors que le dépôt de givre sur une aile d'avion ou sur une route pose des problèmes de sécurité.

De nombreux procédés de détection de givre ont été développés dans l'état de la technique. Parmi ceux-ci, on distingue les procédés analysant une réponse thermique d'un système au contact d'une surface sur laquelle du givre est susceptible de se déposer. Un procédé de détection de givre de ce type est par exemple décrit dans le document US 6 328 467. Dans ce document, un élément résistif au contact de la surface est chauffé par effet Joule en injectant du courant dans celui-ci à une température inférieure à la température de fusion du givre. La température de l'élément résistif est mesurée pendant la relaxation thermique de l'élément et comparée à une courbe de référence pour déterminer la présence ou l'absence de givre sur ladite surface.

Un tel procédé nécessite cependant de connaître les propriétés thermiques de la surface, ce qui suppose donc un réglage particulier du procédé pour chaque type de surface, et donc un champ d'application très limité du procédé. D'une manière générale, les procédés de l'état de la technique nécessitent de connaître les propriétés de la surface et/ou les propriétés de l'environnement de la surface pour détecter le givre.

L'art antérieur pertinent est divulgué dans l'US 2014/191084 A1.

**EXPOSE DE L'INVENTION**

Le but de la présente invention est de proposer un procédé et un système de détection d'une couche de glace, notamment de givre, qui permettent la détection de glace sur une surface sans connaissance a priori sur les propriétés de ladite surface ou de son environnement.

A cet effet, l'invention a pour objet un procédé de détection d'une couche de glace, notamment de givre, tel que défini par la revendication 1.

En d'autres termes, la réponse thermique de l'élément pendant son chauffage varie selon qu'il y ait ou non de la glace sur la surface, variation qui peut être caractérisée de manière indépendante des propriétés thermiques de la surface ou de son environnement. Notamment, si de la glace est présente, sa fusion absorbe de l'énergie thermique, ce qui modifie la cinétique de la montée en température de l'élément par rapport à la cinétique de celui-ci en absence de glace. Plus particulièrement, l'évolution de la température de l'élément est régie par l'équation de Laplace et le type d'évolution de cette température est déterminé par la condition à la limite de l'élément et donc à la condition à la surface pouvant être verglacée.

S'il y a absence de glace, la condition à la limite est de type « diffusive », auquel cas, la température de l'élément présente une évolution sensiblement exponentielle. Au contraire, s'il y a présence de glace, la condition à la limite de l'élément est de type « Dirichlet », qui fixe sensiblement la température de la surface, et donc de l'élément, à la température de fusion de la glace. La température de l'élément est donc sensiblement stabilisée pendant la durée de fusion de la glace. C'est ce changement de comportement de la température de l'élément pendant la fusion de la glace qui permet de déterminer la présence ou l'absence de glace.

L'invention consiste ainsi à déterminer si l'évolution de la température de l'élément pendant son échauffement est de type exponentielle ou non, et cette comparaison ne nécessite aucune information a priori sur la surface ou son environnement.

Selon l'invention, la détermination de l'écart comporte le calcul d'un paramètre de linéarité de ladite grandeur mesuré dans un repère temporel logarithmique, ledit écart étant égal audit paramètre ou calculé en fonction dudit paramètre. Notamment, il comporte le calcul d'un estimateur des moindres carrées ordinaire, la variable expliquée étant ladite grandeur mesurée, la variable explicative étant un logarithme du temps, et le paramètre est égal à $1 - r_{xy}^2$, où $r_{xy}$ est le coefficient de corrélation linéaire d'un estimateur des moindres carrés ordinaire ayant pour variable expliquée ladite grandeur mesurée et pour variable explicative le logarithme du temps. La transformation du temps $t$ en $log(t)$, permet ainsi de caractériser de manière simple et rapide le profil de l'évolution de la température, ou de la grandeur mesurée associée.

Selon un mode de réalisation, l'élément est un élément résistif apte à s'échauffer par effet Joule sous l'effet d'un courant électrique le parcourant, et le chauffage de l'élément comporte l'injection d'un courant électrique dans l'élément, notamment un créneau de courant. Notamment, la mesure de la grandeur dépendant de la température de l'élément comprend la mesure d'une tension électrique entre deux bornes de l'élément résistif. Plus particulièrement, la mesure de la grandeur dépendant de la température de l'élément comprend le calcul de la résistance électrique de l'élément résistif en fonction de la tension mesurée et d'une mesure du courant injectée dans l'élément résistif ou d'un profil de courant électrique injecté prédéterminé.

Selon l'invention, le chauffage est réalisé à puissance thermique constante. Notamment :

- l'élément est un élément résistif apte à s'échauffer par effet Joule sous l'effet d'un courant électrique le parcourant, et le chauffage de l'élément comporte l'injection d'un courant électrique dans l'élément résistif de manière à garder sensiblement constant ;
- et en ce que le procédé comporte la commande du courant injecté dans l'élément résistif de manière à garder sensiblement constant le produit $U \times I$ de la tension $U$ de l'élément résistif par le courant $I$ injecté dans celui-ci.

L'invention a également pour objet un système de détection de glace, notamment de givre, tel que défini par la revendication 7.

Ce système est notamment apte à mettre en œuvre le procédé du type précité.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments structurellement identiques et/ou fonctionnellement identiques, et dans lesquels :

- la figure 1 est une vue schématique d'un système selon l'invention ;
- les figures 2A, 2B et 2C sont des vues schématiques en coupe illustrant des variantes du système avec support et sans support pour un élément chauffant du système de la figure 1 ;
- la figure 3 est une vue schématique de dessus d'un mode de réalisation de l'élément chauffant du système de la figure 1 ;
- la figure 4 est un organigramme d'un procédé de détection selon l'invention ; et
- les figures 5A, 5B, 5C et 5D sont des courbes illustrant un profil de montée en température de l'élément chauffant en l'absence de givre et en présence de givre, dans le repère temporel et dans un repère temporel logarithmique.

## DESCRIPTION DETAILLEE DE L'INVENTION

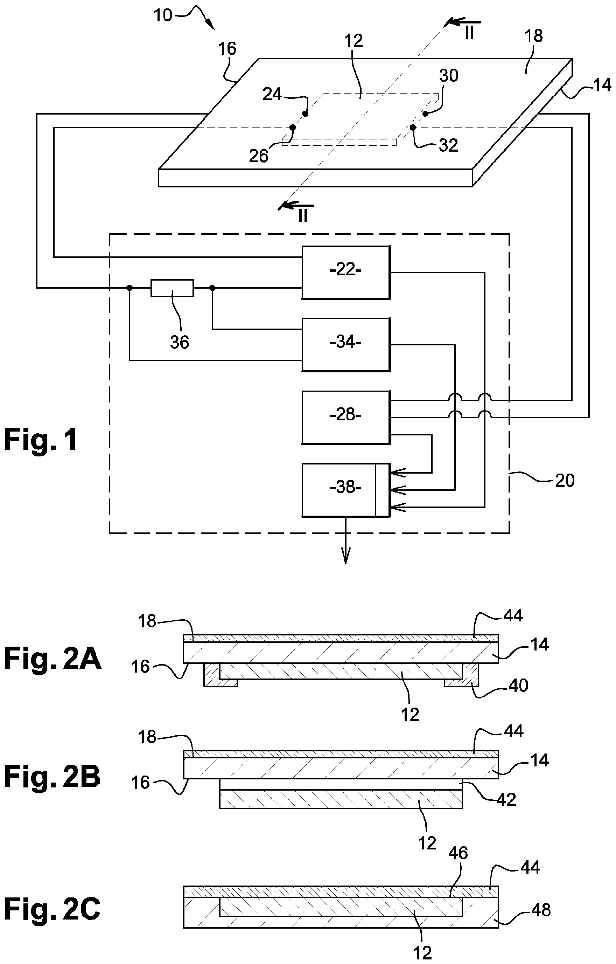

En se référant à la figure 1, un système **10** selon l'invention comporte :

- un élément résistif **12** apte à s'échauffer sous l'effet d'un courant le parcourant, comprenant notamment une partie résistive et une partie formant sonde de température, ou thermistor, pour mesurer la température de la partie résistive, fixé sur une première face **14** d'un support **16,** dont une seconde face **18**, opposée à la première face **14,** est susceptible d'être couverte de glace, notamment de givre, et
- un dispositif **20** connecté à l'élément résistif pour la mise en œuvre d'un procédé de détection de glace sur la face **18** du support **16.**

La seconde face **18** est par exemple destinée à être exposée à un écoulement d'air humide de refroidissement d'un échangeur de pompe à chaleur ou d'un écoulement d'air d'un fuselage d'avion lors d'un vol.

Le dispositif **20** comporte :

- un générateur de courant **22,** connecté à deux bornes d'alimentation en courant **24, 26** de l'élément résistif **12,** pour délivrer à la partie résistive de celui-ci un créneau de courant, ce qui a pour effet de chauffer cette dernière par effet Joule ;
- un premier circuit de mesure **28** pour mesurer une tension de la partie thermistor de l'élément résistif **12,** représentative de la température de la partie résistive, entre deux bornes **30, 32** de ce dernier ;
- un second circuit de mesure **34, 36** pour mesurer le courant délivré par le générateur de courant **22,** par exemple un circuit de mesure **34** de la tension aux bornes d'une résistance **36** connectée entre le générateur **22** et l'élément résistif **12** ; et
- une unité de traitement d'informations **38,** connectée aux circuits de mesure **28, 34,** pour détecter la présence ou l'absence de glace sur la face **18** du support **14** en fonction des mesures délivrées par les circuits **28, 34,** d'une manière qui sera expliquée plus en détail ci-après.

Dans une variante privilégiée de l'invention, le générateur **22** et les circuits de mesure **28, 36** sont pilotés par exemple par l'unité de traitement **38,** qui mémorise des paramètres concernant le courant injecté dans l'élément **12** et synchronise l'injection de courant et les différentes mesures nécessaires à la détection.

En se référant à la vue en coupe de la figure 2A, l'élément résistif **12** est plaqué contre la face **16** du support **14** au moyen d'éléments de fixation **40,** par exemple des brides, des clips, des vis ou autres. Ce type de fixation mécanique permet un contact direct de l'élément résistif **12** avec la face **16** du support, c'est-à-dire un couplage ayant une résistance thermique faible ou nulle. En contrepartie, les éléments de fixation **40** augmentent l'inertie thermique du système et peuvent donc pénaliser sa réponse thermique. En variante, comme illustré à la vue en coupe de la figure 2B, l'élément résistif **12** est fixé à la face **16** du support **14** au moyen d'une colle **42.** De manière avantageuse, la colle **42** présente une haute conductivité thermique et une épaisseur minimisée afin de limiter la résistance thermique et donc un gradient thermique dans l'épaisseur de la couche de colle **42** séparant l'élément **12** du support **14.** La colle est choisie pour être stable dans la gamme de températures subie par l'élément **12,** et notamment stable pour des températures d'au moins 150°C. La colle **42** est par exemple une colle époxy de haute conductivité thermique et de haute température, tel qu'une colle Epo-Tek® de la société Epoxy Technology Inc.

Le support **14** est de préférence constitué d'une feuille d'un matériau de haute conductivité thermique et d'une épaisseur réduite. De cette manière, l'énergie nécessaire à l'élévation de la température du support jusqu'à la température de fusion de la glace n'est pas trop importante par rapport à celle nécessaire à la fusion d'une couche de givre **44** formée sur la face **18,** et le gradient de température dans le support **14** est limité de sorte qu'il n'est pas nécessaire de compenser ce gradient par une température élevée de l'élément résistif **12.**

Plus particulièrement, comme cela sera expliqué ci-après, l'invention mesure la déviation de la montée en température de l'élément **12** sous l'effet d'un apport d'énergie thermique par rapport à un profil exponentiel. Or, cette déviation est d'autant plus marquée que le pourcentage de l'énergie thermique utilisée pour la fusion de la glace lors de la montée en température de l'élément **12** est importante. Pour un support d'épaisseur comprise entre 0,01mm et 5mm et constitué d'un matériau de conductivité thermique supérieure à 200 $Wm^{-1}K^{-1}$ à 20°C, la glace est détectée avec fiabilité.

Dans une variante, le support **14** est métallique, par exemple constitué de cuivre, de conductivité thermique à 20°C égale à 390 $Wm^{-1}K^{-1}$, d'aluminium, de conductivité thermique à 20°C égale à 237 $Wm^{-1}K^{-1}$, ou d'un alliage de ceux-ci. L'élément résistif **12** est alors préférentiellement isolé électriquement du support **14,** par exemple au moyen d'une fine couche de matériau isolant électrique de haute conductivité thermique, par exemple collé au moyen d'une colle électriquement isolante et de haute conductivité thermique, notamment de type époxy.

Dans une autre variante, illustrée à vue en coupe de la figure 2C, la surface susceptible d'être couverte de glace est une face **46** de l'élément **12** lui-même, ce dernier étant par exemple logé dans une cavité ou une ouverture réalisée dans un support **48,** avantageusement bon isolant thermique, tel que par exemple en céramique.

De manière analogue, l'élément **12** est choisi pour limiter la portion d'énergie nécessaire à sa montée en température jusqu'à la température de fusion de la glace, et ainsi accroître la déviation de la réponse thermique de l'élément **12** par rapport à un profil exponentiel en présence de glace, et donc augmenter la fiabilité et la précision de la détection.

De manière avantageuse, la face arrière de l'élément **12,** opposée à celle en contact avec le support ou avec la glace, est isolée thermiquement de manière à réduire les perturbations thermiques.

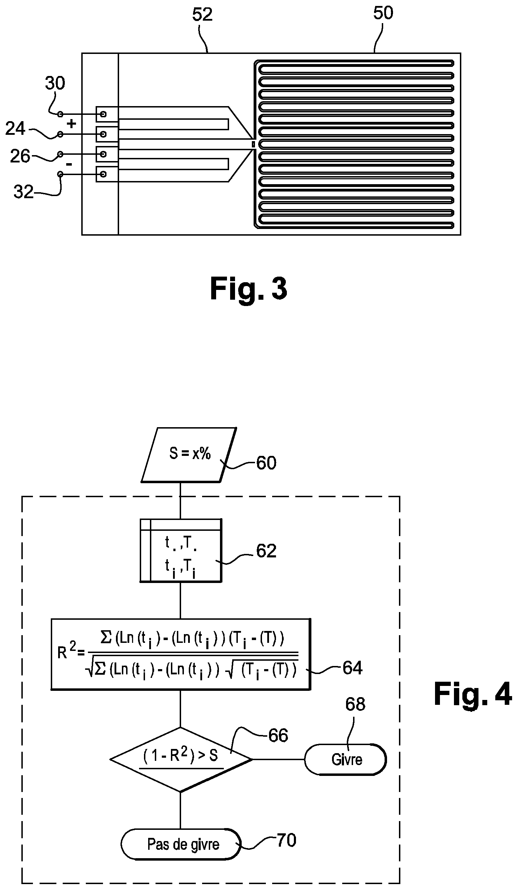

La figure 3 est une vue de dessus d'un exemple de réalisation de l'élément résistif **12.** Dans cet exemple, l'élément **12** comporte un support souple, par exemple en polyimide dans ou sur lequel est formée une piste thermorésistive **50,** par exemple en platine ou en nickel, sous la forme de serpentin et connectée aux bornes **24, 26** d'alimentation électrique, et une partie thermocouple **52,** connecté aux bornes **30, 32.** L'élément résistif **12** est par exemple un réchauffeur/thermocouple commercialisé par la société NeoTIM, Albi, France.

En variante, l'élément résistif **12** comporte une portion résistive et une portion thermistor confondue, auquel les bornes **24** et **26** sont confondues avec les bornes **30, 32,** les deux bornes de l'élément **12** étant utilisées à la fois pour l'injection de courant et pour la mesure de tension. Notamment, l'élément **12** est un thermistor dont l'usage initial est modifié pour mettre en œuvre également le chauffage recherché. Par exemple, l'élément **12** est un thermistor à résistance au platine ou au nickel formée sur support thermiquement isolant, notamment une céramique, permettant ainsi d'isoler la face de l'élément **12** opposée à la surface **18.** Le thermistor est par exemple un thermistor fabriqué par la société Corrège, Pacy-sur-Eure, France, de référence PT100.

Dans ce qui suit, la « résistance de l'élément résistif » se réfère à la résistance de la partie résistive chauffante de l'élément résistif **12** dans laquelle est injecté du courant.

Il va à présent être décrit en relation avec la figure 4 un premier mode de réalisation d'un procédé de détection de givre mis en œuvre à l'aide du système venant d'être décrit.

Dans ce premier mode de réalisation, l'élément résistif **12** et la fixation de celui-ci à la surface **18** sont avantageusement conçus pour que la variation de résistance de la partie résistive chauffante de l'élément **12** soit limitée, de sorte qu'en première approximation la puissance thermique dissipée par effet Joule, et donc la puissance thermique du chauffage mise en œuvre, est constante. Notamment, comme décrit ci-dessus, la résistance thermique entre l'élément **12** et la surface **18** est faible, ce que permet d'atteindre par exemple une colle de haute conductivité d'une épaisseur faible, par exemple quelques millimètres ou moins, et/ou le coefficient de variation en résistance en fonction de la température de la partie résistive chauffante est faible et/ou l'élévation de température de cette dernière reste limitée lors de la mise en œuvre du procédé. De cette manière, la réponse en température de l'élément **12** en absence de glace ne dévie que de manière négligeable d'un profil exponentiel. Par ailleurs, le choix du seuil décrit ci-après permet de tenir compte de ladite déviation, et notamment de déviation plus importante en cas de variation plus importante de la puissance du chauffage.

Le procédé débute par une étape **60** de réglage et de montage du système selon l'invention. Cette étape comprend notamment la mémorisation dans une mémoire informatique de l'unité de traitement **38** des paramètres pour l'algorithme de détection, notamment un seuil S de détection, et le cas échéant, des paramètres de pilotage du générateur **22** pour l'injection de courant dans l'élément **12,** comme décrit ci-après.

Dans une étape **62** suivante, mise en œuvre une fois le système selon l'invention installé conformément à l'application visée, le générateur est piloté pour injecter un courant *I* d'amplitude constante dans l'élément **12.** De préférence, la valeur de courant injectée est choisie pour induire une montée en température rapide de l'élément **12** tout en limitant la température maximale de celui-ci afin de ne pas soumettre les l'élément **12** et ses moyens de fixation à des températures trop importantes. Par exemple, le courant est choisi de manière à obtenir une montée en température telle que $10°C/S \leq \partial T/_{\partial t} \leq 100°C/s$, et/ou de manière à obtenir la température de fusion de la glace en moins de 10s, et de préférence 5s ou moins.

Parallèlement, la mesure de la tension $U_{mes}$ aux bornes **30, 32** de l'élément **12** et le courant $I_{mes}$ réellement injecté sont mesurés par les circuits **22, 28** et échantillonnés par exemple par les circuits **22, 28** ou par l'unité **38** selon une période d'échantillonnage prédéterminée *Ti,* de préférence supérieure à 5 Hz, par exemple 10Hz. La tension et le courant échantillonnés sont alors mémorisés dans l'unité **38.**

Selon l'invention, l'étape **62** d'injection de courant et d'acquisition du courant et de la tension se terminent après une durée prédéterminée T d'injection de courant, par exemple mémorisée dans l'unité **38** et comprise entre 50 et 100 secondes.

Dans une seconde variante, l'unité de traitement **38** met en œuvre une analyse de la stabilité dans le temps des mesures, de la résistance électrique ou de la température de l'élément **12** et stoppe l'étape **62** si la ou les grandeurs, dont la stabilité est analysée sont stables dans le temps. Par exemple, lors de l'étape **62**, l'unité **38** calcule la résistance de l'élément **12** $R(k.Ti) = U_{mes}(k.Ti)\big/I_{mes}(k.Ti)$ à chaque instant *kTi* d'échantillonnage et détermine de manière connue en soi, la température *T(k.Ti)* de la partie résistive chauffante de l'élément **12** correspondant à chaque valeur de résistance *R(K.Ti).*

L'unité **38** stoppe alors l'injection de courant lorsque la variation temporelle de température $\partial T/_{\partial t}$ est inférieure à une valeur prédéterminée, par exemple 0,005°C.s$^{-1}$ pendant une durée prédéterminée, par exemple 5 secondes.

Dans une étape **64** suivante, l'unité de traitement **38** calcule, si cela n'est pas fait lors de l'étape **62,** la résistance électrique $R(k.Ti) = U_{mes}(k.Ti)\big/I_{mes}(k.Ti)$ de l'élément **12** pour chaque instant d'échantillonnage.

Selon l'invention, l'unité **38** calcule en **64** un écart *E* de la résistance *R(k. ti)* vis-à-vis de la linéarité dans un repère logarithme du temps, et plus particulièrement un écart *E* dépendant du coefficient de régression linéaire $r_{xy}$ d'un estimateur des moindres carrés ordinaire de paramètres *â* et *b̂* selon les relations:

$$(\hat{a},\hat{b}) = arg \min_{a\in\mathbb{R},b\in\mathbb{R}} \left(\sum_{k=1}^{K}\big(R(k.Ti) - (a.log(k.Ti) + b)\big)^2\right)$$

où $K.T_i$ est le dernier instant d'acquisition des mesures tension $U_{mes}$ et $I_{mes}$. La variable observée, ou expliquée, est donc la résistance *R(k.ti)* de l'élément **12** et la variable explicative de la régression linéaire selon cet estimateur est la variable *X=log(t)* où *t* est le temps.

Un tel estimateur est bien connu et ne nécessite donc pas d'être décrit plus en détail. Notamment, l'unité **38** calcule en **64** l'écart *E* selon les relations suivantes, ou toute relation équivalente :

$$E = 1 - r_{xy}^2$$

$$r_{xy} = \frac{\sum_{k=1}^{K}\big((log(k.Ti) - \langle log(k.Ti)\rangle)(R(k.Ti) - \langle R(k.Ti)\rangle)\big)}{\sqrt{\sum_{k=1}^{K}(log(k.Ti) - \langle log(k.Ti)\rangle)^2} \cdot \sqrt{\sum_{k=1}^{K}(R(k.Ti) - \langle R(k.Ti)\rangle)^2}}$$

$$\langle log(k.Ti)\rangle = \frac{1}{K}\sum_{k=1}^{K} log(k.Ti)$$

$$\langle R(k.Ti)\rangle = \frac{1}{K}\sum_{k=1}^{K} R(k.Ti)$$

Dans une seconde variante, l'unité **38** calcule, si cela n'est pas fait lors de l'étape **62,** la température $T(k.Ti)$ de l'élément **12** correspondant à chaque valeur de résistance $R(K.Ti)$, puis calcule l'écart $E$ de température $T(k.Ti)$ vis-à-vis de la linéarité dans un repère logarithme du temps, d'une manière analogue à la première variante, la résistance $R$ étant remplacée par la température $T$ dans les relations ci-dessus.

Dans une étape suivante **66** du procédé selon l'invention, l'unité **38** compare la valeur calculée de l'écart $E$ au seuil S mémorisé. Si $E > S$, l'unité **38** détermine, en **68,** qu'une couche de glace est présente et si $S \le E$, l'unité **38** détermine, en **70,** qu'il n'y pas de glace. Par exemple pour un élément **12** formé d'un thermistor à base de platine fixé par une colle de haute conductivité thermique d'une épaisseur de quelque millimètre ou moins, le seuil S est de préférence choisi supérieur ou égal à 0,5%, notamment compris entre 0,5% et 5%. Cette valeur, bien que très faible, permet de détecter avec fiabilité la présence de glace.

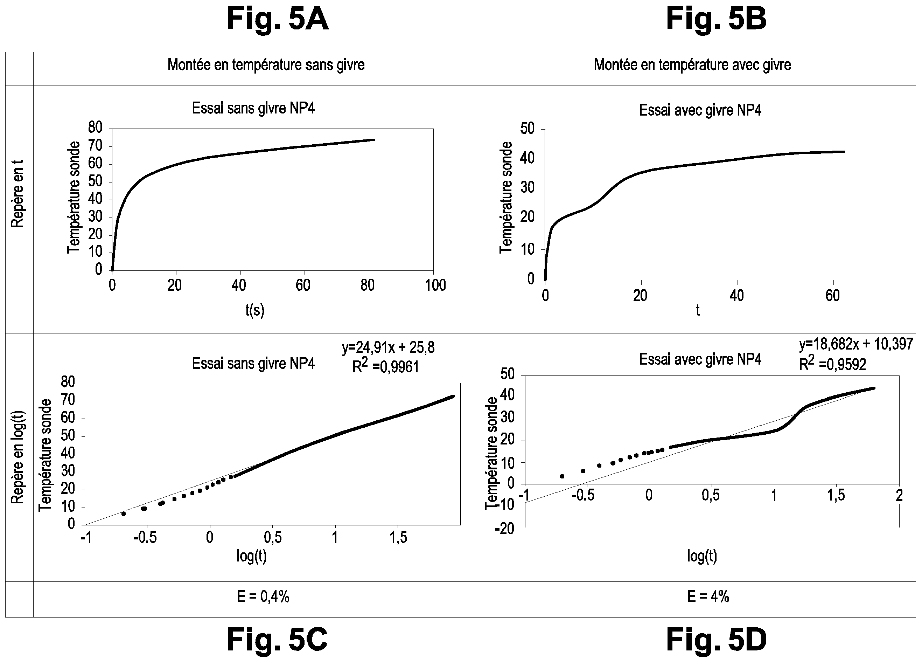

Les figures 5A et 5b sont des courbes de températures d'un élément **12** collé au support à un support **16** tel que décrit précédemment lors d'un même chauffage par injection de courant, respectivement sans givre (figure 5A) et avec givre (figure 5B).

Les figures 5C et 5D illustrent lesdites températures dans un repère logarithmique du temps ainsi que les droites obtenues par régression linéaire, notamment selon un estimateur des moindres carrés ordinaire. On note notamment le comportement de la température en fonction de $log(t)$ lorsqu'il n'y pas de givre et le comportement non linéaire de la température en fonction de $log(t)$ lorsqu'il y a du givre. Par exemple, dans le système selon l'invention testé, en l'absence de givre, le procédé détermine un écart E égal à 0,4%, et par conséquent détecte cette absence. En présence de givre, le procédé détermine un écart E égale à 5%, et détecte donc cette présence.

La valeur du seuil S est par exemple déterminée expérimentalement mettant en œuvre des tests.

Il a été décrit des modes de réalisation particuliers de l'invention.

Notamment, il a été décrit une régression linéaire sur la base d'un estimateur des moindres carrés ordinaire. Cet estimateur est très simple à mettre en œuvre et présente en outre l'avantage de ne nécessiter aucune information a priori sur le système, sur la surface pouvant se glacer ou sur l'environnement de celle-ci.

D'autres types de régression sont bien entendu possibles pour juger de l'écart entre la montée en température de l'élément chauffant et un profil exponentiel. Notamment, des régressions peuvent prendre en compte des informations a priori portant sur le système lui-même, par exemple pour prendre en compte des effets du support et/ou des moyens utilisés pour fixer l'élément au support.

De même, il a été décrit un système dans lequel le courant injecté est mesuré, ce qui permet de tenir compte des fluctuations de courant par rapport à la consigne de courant appliquée au générateur de courant. En variante, le système ne mesure pas le courant et utilise directement la consigne de courant pour le calcul de la résistance de l'élément.

De même, il a été décrit un système dans lequel un créneau de courant constant est appliqué à l'élément résistif, la mise en œuvre de l'invention étant ainsi simple.

Selon l'invention, l'unité **38** pilote le générateur de courant **22** afin de garder sensiblement constante la puissance calorifique dissipée par l'élément **12,** par exemple à une valeur $W_{max}$. Ceci permet ainsi de forcer la réponse thermique du système à présenter un profil sensiblement exponentiel, notamment dans le cas où la partie résistive de l'élément **12** présente une variation importante de sa résistivité lors de l'injection de courant. La détection selon l'invention est ainsi plus robuste. Par exemple, la mesure de la tension est celle de la partie résistive chauffante de l'élément **12,** comme cela est notamment le cas où un thermistor est également utilisé pour le chauffage, ou bien le système comporte une mesure de tension supplémentaire de la tension de ladite partie résistive chauffante, comme cela est notamment le cas où l'élément **12** comprend une sonde de température séparé de la partie résistive chauffante.

Dans cette variante, en prenant l'exemple d'un thermistor également utilisé pour le chauffage, l'injection de courant dans l'élément **12** débute par l'injection d'un courant de valeur $I_{max}$. Une mesure de la puissance moyenne initiale dissipée sous forme de chaleur par l'élément **12** est ainsi égale à $Wmax = U_{mes}(Ti).I_{mes}(Ti)$.

Puis pour chaque instant d'échantillonnage $k.Ti$, l'unité **38** calcule la puissance calorifique produite par l'élément **12** par effet Joule, ou une grandeur dépendante de celle-ci. Notamment, l'unité **38** calcule la puissance $W(k.Ti) = U_{mes}(k.Ti).I_{mes}(k.Ti)$, compare la puissance $W(k.Ti)$ à la valeur $W_{max}$, calcule une nouvelle valeur de courant selon la relation $I = W_{max}/U_{mes}(k.Ti)$ et pilote le générateur de courant **22** pour que ce dernier applique la valeur de courant calculée. Par exemple, si le matériau s'échauffant par effet Joule est du platine ou du nickel, la résistance de ce matériau augmente avec sa température. L'injection d'un courant constant dans le temps implique donc que la puissance calorifique dissipée par l'élément **12**, directement dépendante du produit $U.I = R.I^2$ de la tension et du courant, augmente également avec le temps, ce que permet de corriger la régulation de puissance puisque la dérive de la puissance dissipée est corrigée en diminuant le courant injecté dans l'élément **12** de manière à conserver le produit $U_{mes}.I_{mes}$ sensiblement constant dans le temps. La détection du givre est ainsi plus précise et/ou le choix du matériau s'échauffant par effet Joule est plus important. Notamment, le matériau peut être sélectionné parmi les matériaux dont la résistivité varie fortement avec la température et ainsi être utilisé en tant que capteur de température, et/ou bien le concepteur est plus libre concernant la fixation de l'élément **12**.

De même, des mesures de protection sont mises en œuvre pour limiter la température maximale de l'élément, afin d'éviter d'endommager les composants du système ou des composants environnant celui-ci. Plus particulièrement, la limitation de la puissance calorifique dissipée par l'élément **12**, par exemple telle que décrite précédemment, permet de limiter la température finale de ce dernier. Avantageusement, la limitation de la puissance est réglée pour la température maximale de l'élément **12** ne dépasse pas 200°C.

## Revendications

1. Procédé de détection de glace sur une surface (18), comprenant le chauffage d'un élément (12) placé au contact de la surface (18), la mesure d'une grandeur dépendante de la température de l'élément (12), et la détection de glace sur la surface (18) en fonction de ladite mesure,

   - où :

     ▪ le chauffage (62) de l'élément (12) est réalisé de manière à porter celui-ci à une température strictement supérieure à la température de fusion de la glace pendant une durée prédéterminée avec un puissance thermique constante ; et
     ▪ la mesure (62) de la grandeur dépendante de la température est réalisée pendant le chauffage de l'élément ;

   - **caractérisé en ce que** la détection de la présence de glace comprend :

     ▪ la détermination (64) d'un écart entre ladite grandeur mesurée pendant le chauffage de l'élément (12) et une fonction de croissance exponentielle représentant l'évolution de la température en cas d'absence de glace ; la détermination (64) de l'écart comportant le calcul d'un paramètre de linéarité de ladite grandeur mesurée dans un repère temporel logarithmique, ledit écart étant égal audit paramètre ou calculé en fonction dudit paramètre ;
     ▪ la détection (66, 68) de glace sur la surface si l'écart déterminé est supérieur à un seuil de détection prédéterminé.

2. Procédé de détection de glace sur une surface selon la revendication 1, **caractérisé en ce que** le calcul dudit paramètre de linéarité comporte le paramètre est égal à $1 - r_{xy}^2$, où $r_{xy}$ est le coefficient de corrélation linéaire d'un estimateur des moindres carrés ordinaire, ayant pour variable expliquée ladite grandeur mesuré et pour variable explicative le logarithme du temps.

3. Procédé de détection de glace sur une surface selon l'une quelconque des revendications précédentes, **caractérisé en ce que** l'élément (12) est un élément résistif apte à s'échauffer par effet Joule sous l'effet d'un courant électrique le parcourant, et **en ce que** le chauffage de l'élément (12) comporte l'injection d'un courant électrique dans l'élément, notamment un créneau de courant.

4. Procédé de détection de glace sur une surface selon la revendication 3, *caractérisé* **en ce que** la mesure de la grandeur dépendante de la température de l'élément comprend la mesure d'une tension électrique entre deux bornes de l'élément résistif.

5. Procédé de détection de glace sur une surface selon la revendication 4, *caractérisé* en cc que la mesure de la grandeur dépendante de la température de l'élément comprend le calcul de la résistance électrique de l'élément résistif en fonction de la tension mesurée et d'une mesure du courant injectée dans l'élément résistif ou d'un profil de courant électrique injectée prédéterminé.

6. Procédé de détection de glace sur une surface selon l'une des revendications 1 à 5, *caractérisé* :

   - **en ce que** l'élément est un élément résistif apte à s'échauffer par effet Joule sous l'effet d'un courant électrique le parcourant, et le chauffage de l'élément comporte l'injection d'un courant électrique dans l'élément résistif ;
   - et **en ce que** le procédé comporte la commande du courant injecté dans l'élément résistif de manière à garder sensiblement constant le produit $U \times I$ de la tension $U$ de l'élément résistif par le courant $I$ injecté dans celui-ci.

7. Système de détection de glace sur une surface (18), comprenant un élément résistif (12) au contact de la surface (18) et apte à s'échauffer par effet Joule sous l'effet d'un courant le traversant, un générateur de courant (22) pour alimenter l'élément résistif (12) en courant électrique, un capteur (28) apte à mesurer une grandeur dépendant de la température de l'élément résistif (12), et une unité de calcul (38) apte à déterminer la présence de glace sur la surface (18) en fonction de la mesure délivrée par le capteur, où :

   - le générateur de courant (22) est apte à injecter un courant électrique dans l'élément résistif (12) de manière à porter celui-ci à une température strictement supérieure à la température de fusion de la glace pendant une durée prédéterminée avec une puissance thermique constante ;
   - le capteur (28) est apte à mesurer la grandeur dépendant de la température pendant le chauffage de l'élément résistif;
   - **caractérisé en ce que** l'unité de calcul (38) est apte :

      ▪ à déterminer un écart entre ladite grandeur mesurée pendant le chauffage de l'élément et une fonction de croissance exponentielle représentant l'évolution de la température en cas d'absence de glace ; la détermination de l'écart comportant le calcul d'un paramètre de linéarité de ladite grandeur mesurée dans un repère temporel logarithmique, ledit écart étant égal audit paramètre ou calculé en fonction dudit paramètre ; et
      ▪ à détecter de glace sur la surface si l'écart déterminé est supérieur à un seuil de détection prédéterminé.

**Patentansprüche**

1. Verfahren zum Erkennen von Eis auf einer Oberfläche (18), dieses umfasst das Erwärmen eines Elementes (12), das mit der Oberfläche (18) in Kontakt steht, die Messung einer Größe, die von der Temperatur des Elementes (12) abhängt, und das Erkennen von Frost auf der Oberfläche (18), in Abhängigkeit von dieser Messung,

   - wobei

      ▪ das Erwärmen (62) des Elementes (12) darin besteht dieses, während einer vorher festgelegten Zeitspanne, auf eine Temperatur zu bringen, die deutlich höher ist, als die Schmelztemperatur des Eises, mit konstanter Heizleistung; und
      ▪ die Messung (62) der temperaturabhängigen Größe während der Erwärmung des Elementes stattfindet;

   - **dadurch gekennzeichnet, dass** das Erkennen des Vorhandenseins von Eis umfasst:

      ▪ die Bestimmung (64) einer Differenz zwischen der während des Erwärmens des Elements (12) gemessenen Temperatur und einer exponentiellen Wachstumsfunktion, die die Temperaturentwicklung bei Abwesenheit von Eis darstellt; die Bestimmung (64) der Differenz umfasst die Berechnung eines Linearitätsparameters dieser gemessenen Größe in einem logarithmischen zeitlichen Bezugspunkt, die erwähnte Differenz ist dabei gleich dem erwähnten Parameter oder wird in Abhängigkeit von diesem Parameter berechnet;

■ die Erkennung (66, 68) von Eis auf der Oberfläche, wenn die festgestellte Differenz größer ist als ein vorher festgelegter Erkennungsschwellenwert.

2. Verfahren zur Erkennung von Eis auf einer Oberfläche nach Anspruch 1, *dadurch gekennzeichnet, dass* die Berechnung des erwähnten Linearitätsparameter enthält, dass der Parameter gleich $1-r_{xy}^2$ ist, worin $r_{xy}$ der lineare Korrelationskoeffizient einer Schätzfunktion der kleinsten Standardquadrate ist, wobei die erwähnte gemessene Größe die abhängige Variable ist und der Zeitlogarithmus die unabhängige Variable.

3. Verfahren zur Erkennung von Eis auf einer Oberfläche nach irgendeinem der vorangehenden Ansprüche, *dadurch gekennzeichnet, dass* es sich bei dem Element (12) um ein Widerstandselement handelt, das sich durch den Joule- Effekt unter Einwirkung eines ihn durchlaufenden Stroms erwärmen kann und *dadurch, dass* das Erwärmen des Elementes (12) das Einspeisen eines elektrischen Stroms in das Element beinhaltet, insbesondere ein Stromsegment.

4. Verfahren zur Erkennung von Eis auf einer Oberfläche nach Anspruch 3, *dadurch gekennzeichnet, dass* die Messung der temperaturabhängigen Größe des Elementes die Messung einer elektrischen Spannung zwischen den beiden Klemmen des Widerstandselementes beinhaltet.

5. Verfahren zur Erkennung von Eis auf einer Oberfläche nach Anspruch 4, *dadurch gekennzeichnet, dass* die Messung der temperaturabhängigen Größe des Elementes die Berechnung des elektrischen Widerstandes des Widerstandselementes in Abhängigkeit von der gemessenen Spannung und einer Messung des in das Widerstandselement eingespeisten Stroms oder eines vorher festgelegten eingespeisten Stromprofils beinhaltet.

6. Verfahren zur Erkennung von Eis auf einer Oberfläche nach einem der Ansprüche 1 bis 5, *dadurch gekennzeichnet, dass*

   - es sich bei dem Element um ein Widerstandselement handelt, das in der Lage ist, sich durch den Joule- Effekt unter der Wirkung eines es durchfließenden elektrischen Stroms zu erwärmen, die Erwärmung des Elementes beinhaltet die Einspeisung eines elektrischen Stroms in das Widerstandselement;
   - und dadurch, dass das Verfahren die Steuerung des in das Widerstandselement eingespeisten Stroms beinhaltete, so dass das Produkt *U x I* der Spannung *U* des Widerstandselementes mal dem darin eingespeisten Strom *I* im Wesentlichen konstant ist.

7. System zur Erkennung von Eis auf einer Oberfläche (18), mit einem Widerstandselement (12), in Kontakt mit der Oberfläche (18), das in der Lage ist, sich durch den Joule- Effekt unter der Wirkung eines durchfließenden elektrischen Stroms zu erwärmen, einem Stromgenerator (22) zur Versorgung des Widerstandselementes (12) mit elektrischen Strom, einem Sensor (28), der in der Lage ist, eine temperaturabhängige Größe des Widerstandselementes (12) zu messen und eine Berechnungseinheit (38), die in der Lage ist, das Vorhandensein von Eis auf der Oberfläche (18) in Abhängigkeit von der vom Sensor gelieferten Messung zu bestimmen worin:

   - der Stromgenerator (22) in der Lage ist, einen elektrischen Strom in das Widerstandselement (12) einzuspeisen, so dass dieses auf eine Temperatur gebracht wird, die deutlich höher ist, als die Schmelztemperatur des Eises, während einer vorher festgelegten Zeitspanne, mit einer konstanten Wärmeleitung;
   - der Sensor (28) in der Lage ist, die temperaturabhängige Größe während der Erwärmung des Widerstandselementes zu messen;
   - **dadurch gekennzeichnet, dass** die Berechnung (38) in der Lage ist:

     ■ eine Differenz zwischen der erwähnten, während des Erwärmens des Elements (12) gemessenen Größe und einer exponentiellen Wachstumsfunktion, die die Temperaturentwicklung bei Abwesenheit von Eis darstellt zu bestimmen; die Bestimmung der Differenz umfasst dabei die Berechnung eines Linearitätsparameters dieser gemessenen Größe in einem logarithmischen zeitlichen Bezugspunkt, die erwähnte Differenz ist dabei gleich dem erwähnten Parameter oder wird in Abhängigkeit von diesem Parameter berechnet; und
     ■ Eis auf der Oberfläche zu erkennen, wenn die festgestellte Differenz größer ist als ein vorher festgelegter Erkennungsschwellenwert.

**Claims**

1. A method of detecting ice on a surface (18), comprising the heating an element (12) placed in contact with the surface (18), measuring a temperature-dependent quantity of the element (12), and detecting ice on the surface (18) as a function of said measurement,

    - or:

        ■ the heating (62) of element (12) is carried out in such a way as to ensure that the temperature is strictly above the melting temperature of the ice for a predetermined period of time with constant thermal power; and
        ■ the measurement (62) of the temperature-dependent variable is carried out while the element is being heated;

    - **characterised in that** the detection of the presence of ice comprises:

        ■ determining (64) a deviation between said measured quantity during the heating of the element (12) and an exponential growth function representing change of the temperature in the absence of ice; the determination (64) of the deviation comprising the calculation of a parameter of linearity of said measured quantity in a logarithmic time frame, the said deviation being equal to the said parameter or calculated as a function of said parameter;
        ■ the detection (66, 68) of ice on the surface if the determined deviation is above a predetermined detection threshold.

2. A method of detecting ice on a surface according to claim 1, **characterized in that** the calculation of said linearity parameter comprises the parameter is equal to 1 - $r_{xy}2$ in which $r_{xy}$ is the linear correlation coefficient of an ordinary least squares estimator, having as explained variable the said measured quantity and for the explanatory variable the logarithm of time.

3. A method of detecting ice on a surface according to any of the preceding claims, **characterised in that** the element (12) is a resistive element capable of heating by Joule effect under the effect of an electric current conducted through it, and **in that** the heating of the element (12) comprises the injection of an electric current into the element, in particular a current pulse.

4. A method of detecting ice on a surface according to claim 3, **characterised in that** the measurement of the temperature-dependent quantity of the element comprises measuring an electrical voltage between two terminals of a resistive element.

5. A method of detecting ice on a surface according to claim 4, **characterised in that** the measurement of the temperature-dependent quantity of the element comprises the calculation of the electrical resistance of the resistive element as a function of the measured voltage and a measurement of the current injected into the resistive element or a predetermined electrical current profile.

6. A method of detecting ice on a surface according to one of claims 1 to 5, **characterised in that**:

    - **in that** the element is a resistive element capable of being heated by Joule effect under the effect of an electric current flowing through it, and the heating of the element involves the injection of an electric current into the resistive element;
    - and **in that** the method comprises controlling the current injected into the resistive element so as to keep substantially constant the product U x / the voltage U of the resistive element by the current I injected into it.

7. A method of detecting ice on a surface (18), comprising a resistive element (12) in contact with the surface (18) and adapted to heat by Joule effect under the effect of a current conducted through it, a current generator (22) for supplying the resistive element (12) with electric current, a probe (28) adapted to measure a quantity dependent on the temperature of the resistive element (12), and a processing unit (38) adapted to determine the presence of ice on the surface (18) in accordance with the measurement delivered by the probe, or

    - the current generator (22) is suitable for injecting an electric current in the resistive element (12) so as to bring the latter to a temperature strictly above the melting temperature of the ice for a period of time with constant thermal power;

- the sensor (28) is adapted to measure the temperature-dependent quantity during the heating of the resistive element;

- **characterized in that** the calculation unit (38) is suitable for the following purposes:

  ▪ to determine a deviation between the said measured quantity during heating.

  ▪ of the element and an exponential growth function representing the temperature evolution in the absence of ice; the determination of the temperature deviation comprising the calculation of a linearity parameter of said measured quantity in a logarithmic time frame, said deviation being equal to said parameter or calculated as a function of said parameter; and in detecting ice

  ▪ to detect ice on the surface if the distance determined is greater than a predetermined detection threshold.

Fig. 1

Fig. 2A

Fig. 2B

Fig. 2C

52    50

**Fig. 3**

30
24 +
26 −
32

50
52

$S = x\%$ — 60

$t_{.}, T_{.}$
$t_i, T_i$ — 62

$$R^2 = \frac{\sum (Ln(t_i) - (Ln(t_i)))(T_i - (T))}{\sqrt{\sum (Ln(t_i) - (Ln(t_i)))} \sqrt{(T_i - (T))}}$$ — 64

68

$(1 - R^2) > S$ — 66    Givre

Pas de givre — 70

**Fig. 4**

Fig. 5A — Montée en température sans givre — Essai sans givre NP4 — Repère en t

Fig. 5B — Montée en température avec givre — Essai avec givre NP4 — Repère en t

Fig. 5C — Essai sans givre NP4 — $y = 24,91x + 25,8$ $R^2 = 0,9961$ — $E = 0,4\%$ — Repère en log(t)

Fig. 5D — Essai avec givre NP4 — $y = 18,682x + 10,397$ $R^2 = 0,9592$ — $E = 4\%$ — Repère en log(t)

**RÉFÉRENCES CITÉES DANS LA DESCRIPTION**

**Documents brevets cités dans la description**

- US 6328467 B

- US 2014191084 A1